# EUROPÄISCHE PATENTSCHRIFT

(11) **EP 4 065 309 B1**
(45) Veröffentlichungstag und Bekanntmachung des Hinweises auf die Patenterteilung: **10.01.2024**
(21) Anmeldenummer: 20788742.3
(22) Anmeldetag: 06.10.2020
(51) Int. Cl.: B23K 26/14, B23K 26/38, B23K 26/40

(54) **DÜSE FÜR EINE LASERBEARBEITUNGSVORRICHTUNG UND LASERBEARBEITUNGSVORRICHTUNG UMFASSEND DIESELBE**
NOZZLE FOR A LASER MACHINING DEVICE AND LASER MACHINING DEVICE COMPRISING SAME
BUSE POUR DISPOSITIF D'USINAGE AU LASER ET DISPOSITIF D'USINAGE AU LASER COMPRENANT CELLE-CI

(30) Priorität: 25.11.2019 DE 102019131784
(43) Veröffentlichungstag der Anmeldung: 05.10.2022
(73) Patentinhaber: Precitec GmbH & Co. KG, 76571 Gaggenau-Bad Rotenfels (DE)
(72) Erfinder: OPITZ, Florian, 79331 Teningen (DE); LOOSE, Christian, 76571 Gaggenau (DE)
(74) Vertreter: Ter Meer Steinmeister & Partner
(86) Internationale Anmeldenummer: PCT/EP2020/077980
(87) Internationale Veröffentlichungsnummer: WO 2021/104727

(56) Entgegenhaltungen:
- EP-A1- 1 669 159
- DE-A1- 3 637 568
- US-A1- 2018 043 470

## Beschreibung

Die vorliegende Offenbarung betrifft eine Düse für eine Laserbearbeitungsvorrichtung und eine Laserbearbeitungsvorrichtung, die eine solche Düse umfasst. Die vorliegende Offenbarung betrifft insbesondere eine Schneiddüse für eine Laserbearbeitungsvorrichtung und eine Laserbearbeitungsvorrichtung, die eine solche Schneiddüse umfasst.

### Hintergrund

In einem Laserbearbeitungssystem zur Bearbeitung eines Werkstücks, insbesondere eines metallischen Werkstücks oder Materials, wird der von einer Laserlichtquelle oder einem Ende einer Laserleitfaser austretende Laserstrahl mit Hilfe einer Strahlführungs- und Fokussieroptik auf das zu bearbeitende Werkstück fokussiert oder gebündelt, welches das Werkstück lokal auf Schmelztemperatur erhitzt. Die Bearbeitung kann beispielsweise ein Laserschneiden, -löten oder -schweißen umfassen. Das Laserbearbeitungssystem kann eine Laserbearbeitungsvorrichtung, beispielsweise einen Laserbearbeitungskopf, kurz "Bearbeitungskopf", beispielsweise einen Laserschneidkopf oder einen Laserschweißkopf, umfassen. Bei der Bearbeitung tritt der Laserstrahl aus der Laserbearbeitungsvorrichtung aus. Zu diesem Zweck kann an dem Bearbeitungskopf eine Düse angebracht sein. Die Düse kann beispielsweise eine Schneiddüse sein. Beim Schneiden metallischer Materialien bzw. Werkstücke mittels eines Lasers tritt üblicherweise gemeinsam mit dem Laserstrahl eine koaxial geführte Gasströmung oder Gasstrom eines Prozess- oder Schneidgases aus der Düse aus. Durch die Düse kann die Laserstrahlung und das Prozessgas auf die Prozesszone am zu bearbeitenden Werkstück gerichtet werden.

Im Schneidprozess erfüllt das Schneidgas verschiedene Aufgaben. Zum einen unterstützt es durch die Übertragung von Druck- und Scherkräften an der Schnittfront und an den Schnittflanken den Austrieb des aufgeschmolzenen Materials aus der Schnittfuge. Diese Funktion des Schneidgases dominiert beim Schneiden von Edelstahl, weshalb in diesem Anwendungsfall ein inertes Medium, üblicherweise Stickstoff (N2) verwendet wird. Beim Schneiden von Baustahl hingegen wird ein reaktives Gas verwendet, üblicherweise Sauerstoff (O2). Das Schneidgas unterstützt in diesem Anwendungsfall den Trennvorgang, indem es die Umsetzung von Eisen zu Eisenoxid ermöglicht. Auf diese Weise wird neben der Laserstrahlung zusätzlich Reaktionswärme in den Prozess eingebracht. Daneben bleibt auch beim Schnitt von Baustahl die Funktion des Schmelzaustriebs erhalten. Als dritte Aufgabe verhindert das Schneidgas eine Verschmutzung des letzten optischen Elementes im Bearbeitungskopf, indem Prozessemissionen durch Impulsübertrag abgelenkt werden.

Um einen sicheren Austrieb der Schmelze zu gewährleisten, muss sichergestellt werden, dass ein ausreichender Anteil des Volumenstroms des Gases, der aus der Schneiddüse austritt, auch in den Schnittspalt eintritt. Da beim Laserschneiden mit klassischen Düsen aber ein bestimmter Abstand zwischen der Schneiddüse und dem Werkstück eingehalten werden muss (typischerweise < 1 mm), strömt auch immer ein bestimmter Anteil des Gases in radialer, horizontaler oder lateraler Richtung über das Werkstück ab. Hierdurch erhöht sich der Gasverbrauch deutlich über den Volumenstrom hinaus, der für die Funktion des Schmelzaustriebs eigentlich benötigt würde. Beim Schneiden mit Sauerstoff wird typischerweise mit Eingangsdrücken von 3 bar oder weniger (Absolutdruck, gemessen am Einlass des Bearbeitungskopfes) gearbeitet. Beim Schneiden mit Stickstoff hingegen wird typischerweise mit hohen Eingangsdrücken von 2 bar bis 30 bar (Absolutdruck, gemessen am Einlass des Bearbeitungskopfes) und entsprechend hohen Volumenströmen gearbeitet. Daher ist dieses Problem insbesondere beim Schneiden mit Stickstoff relevant.

Um das beschriebene Problem zu lösen, kann die Düse oder ein Teil der Düse, insbesondere eine Hülse, direkt auf das Werkstück aufgesetzt werden, um so ein radiales Abströmen des Gases zu unterbinden und den Schnittspalt zur Umgebung abzudichten.

DE 36 37 568 A1 zeigt eine Düse mit durch Abschrauben verstellbarer Hülse. EP 1 669 159 zeigt eine Bearbeitungsdüse für eine Laserbearbeitungsmaschine, die eine auf einen Düsenkörper aufgesetzte Düsenhülse umfasst, wobei die Düsenhülse über den Düsenkörper hinausragt. Am unteren Bereich des Düsenkörpers nahe der Düsenkörperaustrittsöffnung ist ein Positionierungsteil vorgesehen, das als Anschlagfläche in Richtung des zu bearbeitenden Werkstücks dient, sodass eine vertikale Bewegung der Düsenhülse relativ zur Düsenkörperaustrittsöffnung begrenzt ist. Auch US 2018/0043470 A1 (beschreibend alle Merkmale des Oberbegriffs der Ansprüche 1 und 15) zeigt eine Düse mit beweglicher Hülse.

Während des Laserschneidens entstehen Prozessemissionen, beispielsweise Spritzer der flüssigen Schmelze, Ruß und metallhaltiger Rauch. Trotz des ausströmenden Schneidgases können diese Emissionen auch in Richtung der Schneiddüse aus der Prozesszone austreten. Da insbesondere die Hülse während der Bearbeitung kontinuierlich auf der Werkstückoberfläche aufsetzt, dringen die Emissionen leicht in den Freiraum zwischen der Hülse und einer Innendüse ein und setzen sich dort auf den Oberflächen ab. Auf diese Weise wird die Beweglichkeit der Hülse zunehmend eingeschränkt, bis sie ihre Funktion nicht mehr erfüllen kann. Typischerweise muss in diesem Fall die gesamte Düse ausgetauscht werden. Das Problem ist umso relevanter, je schmaler der Spalt zwischen Innendüse und Hülse ausgeführt ist.

### Beschreibung der Erfindung

Es ist eine Aufgabe der Erfindung, eine Düse, insbesondere eine Schneiddüse, bereitzustellen, die die Ausbildung einer Doppelströmung aus Ring- und Kernströmung eines Prozessgases ermöglicht. Es ist ferner eine Aufgabe der Erfindung, eine Düse, insbesondere eine Schneiddüse, bereitzustellen, die eine erhöhte Wartungsfreundlichkeit aufweist.

Es ist insbesondere eine Aufgabe der Erfindung, eine Düse, insbesondere eine Schneiddüse, bereitzustellen, die weniger anfällig gegenüber Prozessemissionen ist. Es ist ferner eine Aufgabe der Erfindung, eine Düse, insbesondere eine Schneiddüse, bereitzustellen, die den Austausch einzelner Verschleißteile ermöglicht.

Es ist ebenfalls eine Aufgabe der Erfindung, eine Laserbearbeitungsvorrichtung mit einer solchen Düse bereitzustellen.

Die Erfindung beruht auf dem Grundgedanken, in einem Grundkörper einer Düse, insbesondere einer Schneiddüse, der ein Innenvolumen zum Durchleiten des Laserstrahls und von Prozessgas aufweist, Verbindungskanäle vorzusehen, die das Innenvolumen mit einem Bereich zwischen dem Grundkörper und einer entlang des Grundkörpers beweglich vorgesehenen und den Grundkörper umgebenden Hülse verbinden. Durch die Verbindungskanäle wird ein Teil des Prozessgases vom Innenvolumen in den Bereich zwischen dem Grundköper und der Hülse, der in einen Ringspalt mündet, geleitet, um zusätzlich zu dem Austritt einer innenliegenden bzw. zentralen Kernströmung aus einem Düsenende bzw. Düsenmund des Grundkörpers den Austritt einer die Kernströmung umgebenden Ringströmung des Prozessgases zu ermöglichen.

Die vorstehend beschriebene Düse ermöglicht somit eine Doppelströmung aus Ring- und Kernströmung. Demnach kann die erfindungsgemäße Düse als Doppeldüse bezeichnet werden.

Gemäß einem Aspekt der Erfindung ist eine Düse, insbesondere eine Schneiddüse, für eine Laserbearbeitungsvorrichtung zur Bearbeitung eines Werkstücks mittels eines Laserstrahls in dem Anspruch 1 definiert, wobei die Düse einen Grundkörper umfasst, der ein Innenvolumen zum Durchleiten des Laserstrahls und von Prozessgas, insbesondere von Schneidgas, und einen Düsenmund mit einer Austrittsöffnung zum Austritt des Laserstrahls und einer Kernströmung des Prozessgases aufweist. Der Düsenmund ist das die Austrittsöffnung aufweisende Düsenende. Die Düse umfasst ferner eine bewegliche Hülse mit einem Bundbereich, der entlang eines Führungsbereichs des Grundkörpers beweglich bzw. verschiebbar ist, und einem Ringspaltbereich, der vom Grundkörper beabstandet ist und zusammen mit dem Grundkörper einen Ringspalt zum Austritt einer Ringströmung des Prozessgases bildet. Der Grundkörper weist zudem zumindest einen Verbindungskanal auf, der das Innenvolumen des Grundkörpers mit einem Bereich zwischen dem Grundkörper und der Hülse verbindet, um einen Teil des Prozessgases in den Ringspalt zu leiten.

Gemäß einem weiteren Aspekt der Erfindung, ist eine Laserbearbeitungsvorrichtung zur Bearbeitung eines Werkstücks mittels eines Laserstrahls in dem Anspruch 15 definiert, wobei die Laserbearbeitungsvorrichtung einen Bearbeitungskopf, und eine Düse gemäß einer der hierin beschriebenen Ausführungsformen umfasst, die am Bearbeitungskopf angeordnet ist. Vorteilhafte Ausgestaltungen und Weiterbildungen entsprechend der Erfindung sind in den abhängigen Ansprüchen definiert.

Im Folgenden bezeichnet eine axiale Richtung oder Längsrichtung eine Richtung parallel zu einer Längsachse des Grundkörpers, die parallel und/oder koaxial zu einer Ausbreitungsrichtung oder Strahlachse des Laserstrahls verläuft. Die Längsachse des Grundkörpers kann auch einer Mittelachse des Innenvolumens entsprechen. Die axiale Richtung kann eine Symmetrieachse, insbesondere eine Rotationssymmetrieachse, des Grundkörpers sein und/oder kann in Richtung eines durch die Laserbearbeitungsvorrichtung zu bearbeitenden Werkstücks verlaufen. Eine radiale Richtung ist als zur axialen Richtung senkrechte Richtung definiert. Die Längsachse des Grundkörpers kann also als Zentrum eines rotationssymmetrischen Koordinatensystems betrachtet werden. "Radial nach außen" kann eine radiale Richtung bezeichnen, die von der Längsachse weg zeigt. "Radial nach innen" kann eine radiale Richtung bezeichnen, die zur Längsachse hin zeigt. Dementsprechend kann ein Innenradius eines Bauteils oder Elements als ein Radius betrachtet werden, den das Bauteil an einer in radialer Richtung und zur Längsachse des Grundkörpers hingewandten Fläche oder Seite aufweist, und ein Außenradius eines Bauteils oder Elements als ein Radius betrachtet werden, den das Bauteil an einer in radialer Richtung und zur Längsachse des Grundkörpers abgewandten Fläche oder Seite aufweist. Eine Längsachse der Hülse kann parallel und/oder koaxial mit der Längsachse des Grundkörpers verlaufen und entsprechend definiert sein.

Die Hülse ist also relativ zum Grundkörper beweglich. Die Hülse kann in axialer Richtung des Grundkörpers zwischen einer ersten Endposition und einer zweiten Endposition entlang des Führungsbereichs verschiebbar sein. Dabei mündet der zumindest eine Verbindungskanal vorzugsweise in jeder Position der Hülse zumindest teilweise in den Bereich zwischen dem Grundkörper und der Hülse, insbesondere in ein Stauvolumen.

Der Führungsbereich kann eine Außenfläche aufweisen, die radial nach außen zeigt und/oder der Hülse zugewandt ist. Die Außenfläche kann eine zylindrische Form aufweisen. Ein Querschnitt der Außenfläche des Führungsbereichs senkrecht zur axialen Richtung des Grundkörpers kann entlang der axialen Richtung des Grundkörpers konstant und/oder unverändert bleiben.

Der zumindest eine Verbindungskanal kann in axialer Richtung zwischen dem Führungsbereich und dem Düsenmund angeordnet sein. Insbesondere kann der zumindest eine Verbindungskanal außerhalb des Führungsbereichs angeordnet sein. Dadurch vergrößert sich der Abstand zwischen dem Führungsbereich zum Führen der beweglichen Hülse und dem Düsenmund bzw. der Prozesszone, in der die Prozessemissionen entstehen. Mit anderen Worten ist der Führungsbereich in axialer Richtung des Grundkörpers auf einer dem Düsenmund abgewandten Seite des Verbindungskanals am Grundkörper angeordnet. Dadurch kann ein Verschmutzen bzw. Zusetzen der Düse, insbesondere in Bereichen zwischen dem Grundkörper und der Hülse, durch die Prozessemissionen vermindert bzw. verhindert werden, sodass die Beweglichkeit der Hülse relativ zum Grundkörper erhalten bleibt. Der zumindest eine Verbindungkanal kann sich vom Innenvolumen radial nach außen zum Bereich zwischen Grundkörper und Hülse erstrecken. Beispielsweise kann der zumindest eine Verbindungkanal eine das Innenvolumen umgebende Wandung des Grundkörpers durchdringen bzw. sich durch diese hindurch erstrecken. Der zumindest eine Verbindungkanal kann als Bohrung bzw. Durchgangsbohrung im Grundkörper ausgebildet sein. Im Fall von mehreren Verbindungskanälen können die Verbindungskanäle in Umfangsrichtung des Grundkörpers bzw. des Innenvolumens regelmäßig oder gleich verteilt angeordnet sein. Der zumindest eine Verbindungskanal kann sich senkrecht oder in einem Winkel zur Längsachse des Grundkörpers radial auswärts durch den Grundkörper erstrecken.

Die Hülse kann bezüglich des Grundkörpers verkippbar ausgebildet sein. Insbesondere kann die Hülse um zumindest eine zur axialen Richtung des Grundkörpers senkrechten Achse oder Richtung verkippbar sein. Vorzugsweise ist die Hülse um den Bundbereich am Grundkörper verkippbar. Mit anderen Worten kann die Hülse so ausgebildet sein, dass sie ausschließlich am Bundbereich der Hülse entlang des Führungsbereichs des Grundkörpers geführt ist. Hierdurch wird ein Verkippen ermöglicht. Falls die beschriebene Düse beispielsweise als Aufsetzdüse ausgebildet ist, kann die Hülse so Unebenheiten auf dem Werkstück ausweichen und eine Abdichtung der Prozesszone, insbesondere eines Schnittspalts, zur Umgebung selbst bei unebener Werkstückoberfläche aufrechterhalten.

Die Hülse kann einen Teil des Grundkörpers umgeben, d.h. in Umfangsrichtung. Die Hülse kann die Düse radial nach außen bzw. zur Umgebung hin begrenzen. Die Hülse kann also als Außenhülse bezeichnet werden. Die Hülse kann nach außen hin freiliegend an der Düse angeordnet sein. Mit anderen Worten kann die Hülse außen am Grundkörper angeordnet sein. Die Hülse kann also eine Außenfläche der Düsen bilden. Dadurch kann die Wartungsfreundlichkeit erhöht werden, da die Hülse einfach zugänglich ist und demnach leicht wartbar bzw. austauschbar ist.

Der Bereich zwischen Grundkörper und Hülse kann ein Strömungsgebiet des Prozessgases begrenzen oder definieren. Dieser Bereich bzw. dieses Gebiet können zur Umgebung hin ausschließlich durch die Hülse begrenzt sein. Insbesondere kann ein Strömungsvolumen der Ringströmung des Prozessgases zur Umgebung der Düse hin ausschließlich durch die Hülse begrenzt sein. Somit kann das Strömungsvolumen der Ringströmung ausschließlich zwischen dem Grundkörper, der auch als "Innendüse" bezeichnet werden kann, und der Hülse ausgebildet sein.

Die Hülse kann ferner einen zwischen dem Bundbereich und dem Ringspaltbereich angeordneten Stauvolumenbereich umfassen. Der Stauvolumenbereich der Hülse kann zusammen mit dem Grundkörper ein mit dem Ringspalt verbundenes Stauvolumen definieren. Ein Innenradius der Hülse im Stauvolumenbereich kann größer sein als ein Innenradius der Hülse im Ringspaltbereich und/oder ein Innenradius der Hülse im Bundbereich. Mit anderen Worten kann ein Innenradius des Stauvolumenbereichs größer sein als ein Innenradius des Ringspaltbereichs und/oder ein Innenradius des Bundbereichs. Ein Innenradius des Bundbereichs kann größer sein als ein Innenradius des Ringspaltbereichs der Hülse.

Ein Übergang vom Stauvolumenbereich zum Ringspaltbereich kann abrupt oder in Stufenform erfolgen. Ein Innenradius der Hülse kann sich also zwischen Stauvolumenbereich und Ringspaltbereich abrupt ändern. Vorzugsweise weist der Übergang zwischen dem Stauvolumenbereich und dem Ringspaltbereich eine Fläche auf, die sich in einer Ebene senkrecht zur Längsachse der Hülse erstreckt.

Die Hülse kann eine Innenfläche aufweisen, die vom Grundkörper beabstandet ist und so ausgebildet ist, dass eine aus dem Prozessgasdruck im Bereich zwischen der Hülse und dem Grundkörper resultierende Kraft auf die Hülse in Richtung des Düsenmunds wirkt. Die Innenfläche kann beispielsweise einen ersten Flächenteil in axialer Richtung der Hülse auf einer ersten Seite des zumindest einen Verbindungskanals und einen zweiten Flächenteil in axialer Richtung der Hülse auf einer zweiten, der ersten Seite gegenüberliegenden Seite des zumindest einen Verbindungskanals aufweisen. Das heißt, der erste und der zweite Flächenteil der Innenfläche können entlang der Längsachse der Hülse aufeinanderfolgend angeordnet sein. Der erste Flächenteil kann auf einer dem Ringspalt oder Düsenmund zugewandten Seite des zumindest einen Verbindungskanals, d.h. auf einer dem Führungsbereich abgewandten Seite des zumindest einen Verbindungskanals, angeordnet sein. Der zweite Flächenteil kann auf einer dem Ringspalt oder Düsenmund abgewandten Seite des zumindest einen Verbindungskanals, d.h. auf einer dem Führungsbereich zugewandten Seite des zumindest einen Verbindungskanals, angeordnet sein. Eine Komponente des ersten Flächenteils in einer Ebene senkrecht zur axialen Richtung kann größer sein als eine Komponente des zweiten Flächenteils in einer Ebene senkrecht zur axialen Richtung. Hierdurch kann eine Vorzugsrichtung einer durch das Prozessgas erzeugten Hülsenbewegung in Richtung des Düsenmundes erzielt werden.

Der Stauvolumenbereich der Hülse kann den erster Flächenteil und den zweiten Flächenteil umfassen. Der zweite Flächenteil kann abrupt oder stufenförmig in eine Innenfläche des Ringspaltbereichs übergehen. Die Innenfläche des Ringspaltbereichs kann zylindrisch um die Längsachse der Hülse angeordnet sein und/oder sich in Richtung der Längsachse der Hülse erstrecken. Der erste Flächenteil und der zweite Flächenteil können das Stauvolumen zumindest teilweise begrenzen. Der erste Flächenteil kann als "unterer Flächenteil" und/oder der zweite Flächenteil kann auch als "oberer Flächenteil" bezeichnet werden. Mit anderen Worten ist der erste Flächenteil unterhalb des Stauvolumens angeordnet und der zweite Flächenteil ist oberhalb des Stauvolumens angeordnet.

Der Bundbereich kann einen zylinderringförmigen Bund, Flansch oder eine zylinderringförmige Auskragung aufweisen. Falls die Hülse einen Stauvolumenbereich aufweist, kann sich der Bundbereich vom Stauvolumenbereich radial nach innen und/oder zur Längsachse der Hülse hin erstrecken. Der Bundbereich kann einen Teil des Führungsbereichs umgeben. Ein Innenradius des Bundbereichs kann größer sein als ein Außenradius des Führungsbereichs des Grundköpers. Der Bundbereich kann vom Führungsbereich beabstandet sein. Der Bundbereich kann mit dem Führungsbereich eine Spaltdichtung bilden. Mit anderen Worten kann zwischen dem Führungsbereich und dem Bundbereich ein Spalt ausgebildet sein. Dadurch wird Reibung zwischen der Hülse und dem Grundkörper bei einer Bewegung der Hülse relativ zum Grundkörper verringert bzw. vermieden. Zudem ermöglicht die Spaltdichtung eine bessere Verkippbarkeit der Hülse bezüglich des Grundkörpers. Der Bundbereich und/oder der Führungsbereich können im Wesentlichen zylinderringförmig ausgebildet sein, wobei entsprechend der Erfindung der Führungsbereich im Wesentlichen zylinderringförmig ausgebildet ist. Der Spalt kann zylinderringförmig ausgebildet sein. Alternativ ist auch eine Spielpassung zwischen Bundbereich und Führungsbereich möglich, wobei der Bundbereich in gleitendem Kontakt mit dem Führungsbereich steht.

Ein radial nach innen hin gerichtetes Ende bzw. eine dem Führungsbereich zugewandte Fläche des Bundbereichs kann gerundet und/oder konvex ausgebildet sein, insbesondere halbkreisförmig abgerundet, um ein Verkippen der Hülse relativ zum Grundkörper zu vereinfachen bzw. zu ermöglichen.

Ein Außenradius des Grundkörpers im Bereich des zumindest einen Verbindungskanals kann kleiner sein als ein Außenradius des Führungsbereichs des Grundkörpers. Der Grundkörper kann zumindest einen radial nach außen ragenden Vorsprung aufweisen, der an einem dem Düsenmund zugewandten Ende des Führungsbereichs ausgebildet ist und der die Bewegung der Hülse in axialer Richtung des Grundkörpers begrenzt. Ein Außenradius des Vorsprungs kann größer sein als ein Innenradius des Bundbereichs der Hülse. Die Hülse ist so am Grundkörper angebracht, dass der Bundbereich der Hülse zusammen mit dem Vorsprung des Grundkörpers eine Bewegung der Hülse in axialer Richtung des Grundkörpers begrenzen. Durch den Vorsprung kann demnach ein Abgleiten der Hülse in Richtung des Werkstücks verhindert werden. Der Vorsprung kann als Bund, insbesondere als zylinderringförmiger Bund, Flansch oder Auskragung ausgebildet sein.

Der Grundkörper kann ein Sicherungselement aufweisen, welches den Führungsbereich und/oder den Vorsprung umfasst. Das Sicherungselement kann lösbar mit einer das Innenvolumen des Grundkörpers umgebenden Wandung des Grundkörpers verbindbar sein. Die lösbare Verbindung kann als Gewinde, Steckbolzen, mittels einer Schraube oder ähnlichem erfolgen.

Die Hülse kann ein erstes Teil und ein zweites Teil umfassen. Mit anderen Worten kann die Hülse zweigeteilt ausgeführt sein. Die beiden Teile können lösbar miteinander verbindbar sein. Das erste Teil kann den Bundbereich und das zweite Teil kann den Ringspaltbereich umfassen. Durch die zweigeteilte Hülse können verschleißgefährdete bzw. verschlissene Teile leicht zugänglich sein und bei Bedarf leicht und einfach ausgetauscht werden. In diesem Fall können alle anderen Teile der Düse bzw. der Hülse weiterverwendet werden. Dadurch erhöht sich die Wartungsfreundlichkeit der Düse weiter. Die lösbare Verbindung der beiden Teile kann als Gewinde, Steckbolzen, Schraube oder ähnliches ausgeführt sein.

Ein Gewinde, welches die beiden Teile der Hülse miteinander verbindet, kann einen größeren Radius aufweisen als ein Gewinde, welches das Sicherungselement mit der Wandung des Grundkörpers verbindet. In einer Ausführungsform kann durch das Sicherungselement der erste Teil der Hülse beweglich am Grundkörper angebracht sein. Der zweite Teil der Hülse kann so ausgeführt sein, dass der zweite Teil der Hülse in einem durch das Sicherungselement am Grundkörper angebrachten Zustand des ersten Teils von diesem lösbar ist.

Der Grundkörper, das Innenvolumen, die Hülse, der Ringspaltbereich, der Stauvolumenbereich, der Bundbereich, der Bund, der Führungsbereich, der Vorsprung, die Wandung des Grundkörpers und/oder das Sicherungselement können im Wesentlichen rotationssymmetrisch und/oder im Wesentlichen ringförmig, insbesondere zylinderringförmig, ausgebildet sein.

Der Grundkörper kann in einem Bereich zwischen dem Führungsbereich und dem Düsenmund eine zylindrische Außenform aufweisen. Eine Innenfläche der Hülse im Ringspaltbereich kann zylindrisch geformt sein. Der Ringspalt kann zwischen dem Grundkörper und dem Ringspaltbereich der Hülse in Form eines Zylinderrings ausgebildet sein.

Zumindest ein Bereich des Innenvolumens kann eine konvergente, divergente, konische oder eine zylindrische Form oder eine Kombination dieser Formen aufweisen. Vorzugsweise weist das Innenvolumen im Bereich des Düsenmunds eine sich zum Düsenmund hin verjüngende konische Form auf.

Zumindest der Bundbereich und/oder das erste Teil der Hülse kann aus einem elastischen Material bestehen und/oder kann deformierbar ausgebildet sein. Somit kann der Bundbereich ausgebildet sein, um über den Vorsprung des Grundkörpers gestülpt zu werden. In diesem Fall ist kein separates Sicherungselement erforderlich, um die Düse zu montieren bzw. um die Düse zu warten.

Der Grundkörper und/oder das Sicherungselement können Kupfer umfassen oder daraus bestehen. Alternativ kann der Grundkörper Kupfer und das Sicherungselement Edelstahl umfassen oder daraus bestehen. Dies kann vorteilhaft sein, um ein Kaltverschweißen des Grundkörpers und des Sicherungselements zu verhindern. Außerdem kann dadurch sichergestellt werden, dass die Elemente mehrmals ausgetauscht werden können.

Die Hülse kann aus einem elektrisch isolierenden Material, insbesondere Keramik, Peek und/oder Kunststoff, bestehen oder kann dieses umfassen.

Der zumindest eine Verbindungskanal kann als Langloch, insbesondere als entlang der axialen Richtung des Grundkörpers ausgerichtetes Langloch, ausgebildet sein. Durch Verwendung eines Langlochs erhöht sich bei gleichbleibendem Vordruck und gleichbleibendem Durchmesser des Verbindungskanals der Volumenstrom des Prozessgases durch die Düse, da der Strömungswiderstand der Düse reduziert wird. Außerdem erhöht sich der Anteil der Ringströmung am Volumenstrom des Prozessgases am gesamten Volumenstrom.

Zumindest in einer Position kann die bewegliche Hülse in axialer Richtung des Grundkörpers über den Düsenmund hinausragen oder überstehen. Durch den Überstand der Hülse über den Grundkörper kann eine Prozesszone eines Laserbearbeitungsprozesses, insbesondere ein Schnittspalt, zur Umgebung abgedichtet werden. Der Grundkörper kann zusammen mit der Hülse und dem zu bearbeitenden Werkstück einen im Wesentlichen geschlossenen Raum bilden.

Die Düse kann als Aufsetzdüse ausgebildet sein. Bei einer Aufsetzdüse ist der Abstand zwischen Hülse und Werkstück quasi Null. Ein Abstand zwischen dem Grundkörper und dem Werkstück, insbesondere ein Arbeitsabstand, kann größer Null eingestellt werden. Eine resultierende Kraft, die durch den durch die Verbindungskanäle geleiteten Teil des Prozessgases auf eine Innenfläche der Hülse, insbesondere auf den ersten und den zweiten Flächenteil, ausgeübt wird, kann in Richtung des Düsenmunds bzw. in Ausbreitungsrichtung des Laserstrahls und/oder in Richtung eines zu bearbeitenden Werkstücks wirken. Die resultierende Kraft kann also die Hülse in Ausbreitungsrichtung des Laserstrahls drücken. Dadurch kann die Hülse auf dem Werkstück aufsetzen. Alternativ kann eine Kraft in Richtung des Düsenmunds durch ein elastisches Element zwischen Grundkörper und Bundbereich der Hülse bereitgestellt werden.

Im Bereich zwischen dem Grundkörper und der Hülse, insbesondere im Stauvolumen kann sich durch den durch die Verbindungskanäle geleiteten Teil des Prozessgases ein Druck einstellen, der zwischen dem Druck im Innenvolumen des Grundkörpers und dem Umgebungsdruck liegt.

### Kurzbeschreibung der Figuren

Ausführungsformen der Offenbarung sind in den Figuren dargestellt und werden im Folgenden näher beschrieben. Es zeigen:
Figur 1 eine schematische Querschnittsansicht einer Düse für eine Laserbearbeitungsvorrichtung zur Bearbeitung eines Werkstücks mittels eines Laserstrahls gemäß einer ersten Ausführungsform der Offenbarung;
Figuren 2A bis 2C schematische Querschnittsansichten der Düse für eine Laserbearbeitungsvorrichtung zur Bearbeitung eines Werkstücks mittels eines Laserstrahls aus Figur 1 bei verschiedenen Abständen zwischen einem Grundkörper der Düse und einem zu bearbeitenden Werkstück;
Figuren 3A und 3B schematische dreidimensionale Ansichten der Düse für eine Laserbearbeitungsvorrichtung zur Bearbeitung eines Werkstücks mittels eines Laserstrahls gemäß einer ersten Ausführungsform der Offenbarung;
Figur 4 eine schematische Querschnittsansicht einer Düse für eine Laserbearbeitungsvorrichtung zur Bearbeitung eines Werkstücks mittels eines Laserstrahls gemäß einer zweiten Ausführungsform der Offenbarung;
Figur 5 eine schematische Querschnittsansicht einer Düse für eine Laserbearbeitungsvorrichtung zur Bearbeitung eines Werkstücks mittels eines Laserstrahls gemäß einer dritten Ausführungsform der Offenbarung.

### Detaillierte Beschreibung der Ausführungsformen

Im Folgenden werden, sofern nicht anders vermerkt, für gleiche und gleichwirkende Elemente dieselben Bezugszeichen verwendet.

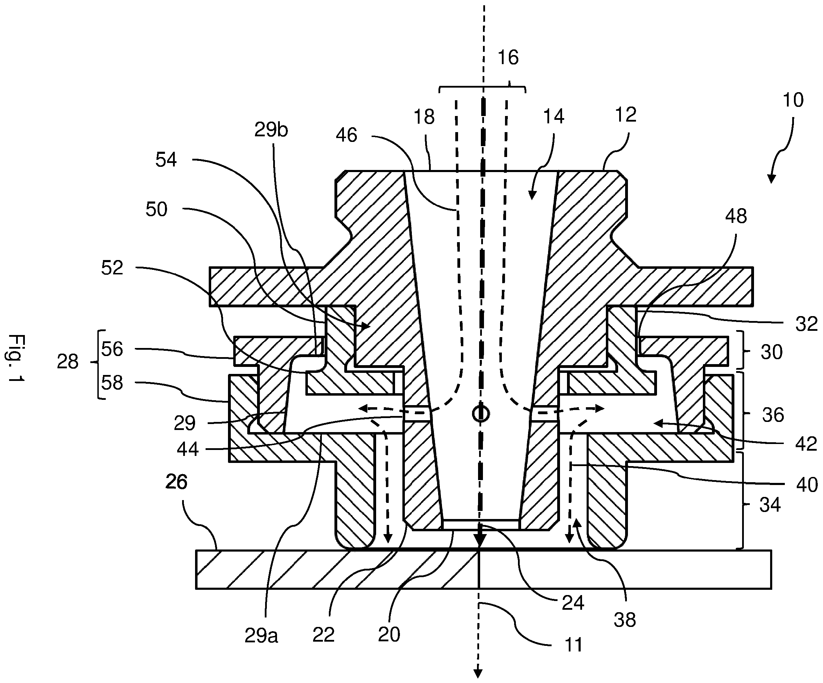

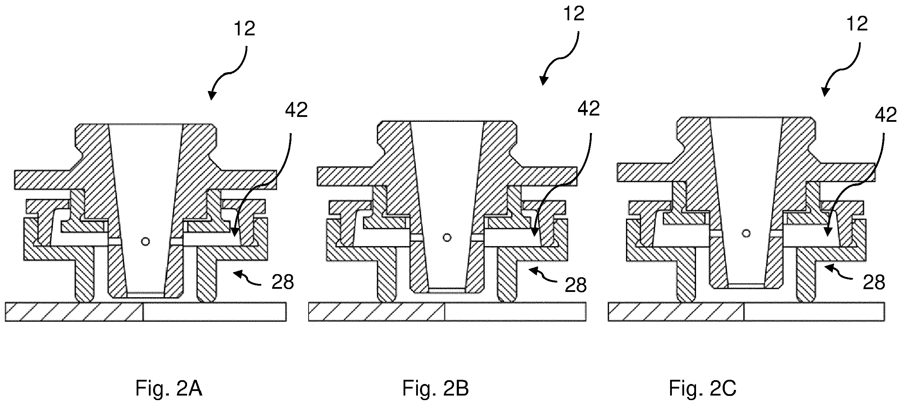

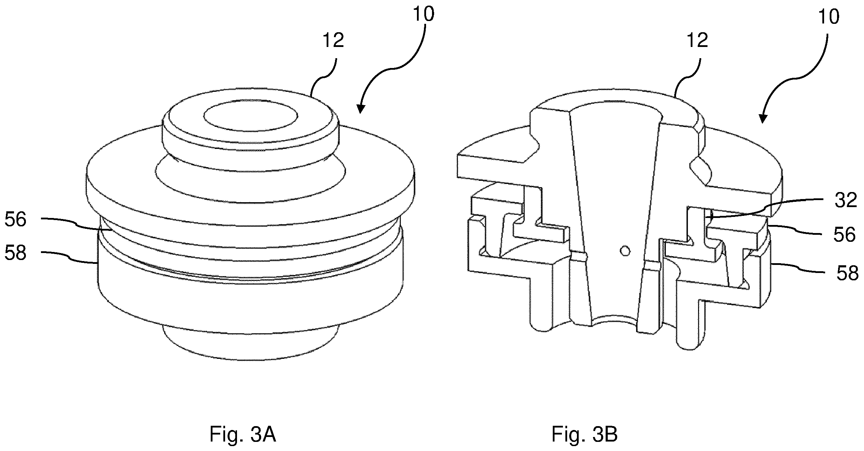

Figuren 1, 2A bis 2C zeigen schematische Querschnittsansichten einer Düse für eine Laserbearbeitungsvorrichtung zur Bearbeitung eines Werkstücks mittels eines Laserstrahls gemäß einer ersten Ausführungsform der Offenbarung. Figuren 3A und 3B zeigen schematische dreidimensionale Ansichten der Düse für eine Laserbearbeitungsvorrichtung zur Bearbeitung eines Werkstücks mittels eines Laserstrahls gemäß einer ersten Ausführungsform der Offenbarung;

Die Düse 10 umfasst einen Grundkörper 12, der auch als "Innendüse" bezeichnet werden kann. Der Grundkörper 12 umfasst ein Innenvolumen 14. Das Innenvolumen 14 dient zum Durchleiten des Laserstrahls (nicht gezeigt) und von Prozessgas, insbesondere Schneidgas, 16. Dazu umfasst der Grundkörper 12 eine Eintrittsöffnung 18 und eine Austrittsöffnung 20. Die Austrittsöffnung 20 ist an einem Düsenmund oder Düsenende 22 ausgebildet und ermöglicht den Austritt des Laserstrahls und einer Kernströmung 24 des Prozessgases 16 in Richtung einer Prozesszone von einem Werkstück 26, um dieses zu bearbeiten. Die Düse 10 kann beispielsweise eine Schneiddüse für einen Laserschneidprozess sein.

Im Folgenden ist eine Längsachse 11 des Grundkörpers 12 definiert als eine Achse des Grundkörpers 12, die parallel und/oder koaxial zu einer Ausbreitungsrichtung oder Strahlachse des Laserstrahls verläuft. Die Längsachse 11 kann eine Symmetrieachse, insbesondere eine Rotationssymmetrieachse, des Grundkörpers 12 sein. Eine radiale Richtung wird als zur Längsachse 11 senkrechte Richtung oder Achse definiert. Die Längsachse 11 kann also als Zentrum eines rotationssymmetrischen Koordinatensystems betrachtet werden. "Radial nach außen" bezeichnet eine radiale Richtung, die von der Längsachse 11 weg zeigt. "Radial nach innen" bezeichnet eine radiale Richtung, die zur Längsachse 11 hinzeigt. Dementsprechend wird ein Innenradius eines Bauteils oder Elements als ein Radius betrachtet, den das Bauteil an einer in radialer Richtung und zur Längsachse 11 hingewandten Fläche oder Seite aufweist, und ein Außenradius eines Bauteils oder Elements als ein Radius betrachtet werden, den das Bauteil an einer in radialer Richtung und zur Längsachse 11 abgewandten Fläche oder Seite aufweist.

Die Düse 10 umfasst ferner eine bewegliche Hülse 28. Eine Längsachse der Hülse 28 kann eine Symmetrieachse, insbesondere eine Rotationssymmetrieachse, der Hülse 28 sein. Die Längsachse der Hülse kann im Wesentlichen koaxial mit der Längsachse 11 des Grundkörpers 12 verlaufen. Die Hülse 28 umfasst einen Bundbereich 30, der entlang eines Führungsbereichs 32 des Grundkörpers 12 in axialer Richtung, d.h. entlang bzw. parallel zur Längsachse 11, verschiebbar ist. Mit anderen Worten ist die Hülse 28 relativ zum Grundkörper 12 beweglich. Die Hülse 28 umfasst ferner einen Ringspaltbereich 34, der vom Grundkörper 12 beabstandet ist, und, optional, einen zwischen dem Bundbereich 30 und dem Ringspaltbereich 34 angeordneten Stauvolumenbereich 36. Die Hülse 28 kann den Grundkörper 12 zumindest teilweise umfänglich umgeben. Die Hülse 28 kann die Düse 10 radial nach außen bzw. zur Umgebung hin begrenzen. Die Hülse 28 kann nach außen hin freiliegend bzw. an der Düse 10 außen freiliegend angeordnet sein. Mit anderen Worten kann die Hülse 28 au-ßen am Grundkörper 12 angeordnet sein. Dadurch kann die Wartungsfreundlichkeit erhöht werden. Die Hülse 28 kann deshalb auch als "Außenhülse" bezeichnet werden.

Der Ringspaltbereich 34 der Hülse 28 und der Grundkörper 12 bilden zusammen einen Ringspalt 38, durch den Prozessgas 16 als Ringströmung 40 austritt. Der Stauvolumenbereich 36 bildet zusammen mit dem Grundkörper 12 ein mit dem Ringspalt 38 verbundenes Stauvolumen 42. Mit anderen Worten ist der Ringspalt 38 zwischen einem ersten Bereich des Grundkörpers 12 und dem Ringspaltbereich der Hülse 28 angeordnet, und das Stauvolumen 42 ist zwischen einem zweiten an den ersten Bereich angrenzenden Bereich des Grundkörpers 12 und dem Stauvolumenbereich 36 der Hülse 28 angeordnet. Der Ringspalt 38 kann insbesondere zylinderringförmig ausgebildet sein, und/oder eine Innenfläche 29 der Hülse 28 im Ringspaltbereich 34 und/oder der Ringspaltbereich 34 können zylinderförmig ausgebildet sein. Der Grundkörper 12 bzw. eine Außenfläche einer Wandung des Grundkörpers 12 kann in einem Bereich zwischen dem Führungsbereich 32 und dem Düsenmund 22 konisch oder zylinderförmig ausgebildet sein. Die Außenfläche der Wandung des Grundkörpers 12 im Führungsbereich 32 weist einen gleichmäßigen Abstand zur Längsachse des Grundkörpers 12 auf und ist vorzugsweise zylinderförmig.

Der Grundkörper 12 weist zumindest einen Verbindungskanal 44 auf, der das Innenvolumen 14 mit einem Bereich bzw. Volumen zwischen dem Grundkörper 12 und der Hülse 28 verbindet. Gemäß der gezeigten Ausführungsform verbindet der zumindest eine Verbindungskanal 44 das Innenvolumen 14 mit dem Stauvolumen 42, die Offenbarung ist aber nicht darauf beschränkt. Wie gezeigt ist der zumindest eine Verbindungskanal 44 in axialer Richtung zwischen dem Führungsbereich 32 und dem Düsenmund 22 angeordnet.

Wie in Figur 1 gezeigt, umfasst der zumindest eine Verbindungskanal 44 vier einzelne Verbindungskanäle 44, die in Umfangsrichtung des Innenvolumens 14 regelmäßig bzw. gleich verteilt angeordnet sind, die Offenbarung ist aber nicht darauf beschränkt. Der zumindest eine Verbindungskanal 44 ist im Wesentlichen zylinderförmig ausgebildet. Der zumindest eine Verbindungskanal 44 kann insbesondere als Bohrung ausgebildet sein.

Der zumindest eine Verbindungskanal 44 dient dazu, einen Teil 46 des Prozessgases 16 vom Innenvolumen 14 in das Stauvolumen 42 und anschließend in den Ringspalt 38 zu leiten, von dem es als Ringströmung 40 in Richtung des Werkstücks 26 austritt. Mit anderen Worten tritt das Prozessgas 16 über die Eintrittsöffnung 18 in das Innenvolumen 14 des Grundkörpers 12 ein. Ein Teil des Prozessgases 16 tritt als Kernströmung 24 durch die Austrittsöffnung 20 aus dem Düsenmund 22 des Grundkörpers 12 aus und ein anderer Teil 46 des Prozessgases 16 tritt als Ringströmung 40 aus dem Ringspalt 38 zwischen dem Grundkörper 12 und dem Ringspaltbereich 34 der Hülse 28 aus. Sowohl die Kernströmung 24 als auch die Ringströmung 40 treffen koaxial zum Laserstrahl auf das zu bearbeitende Werkstück 26. Demnach umgibt die Ringströmung 40 die Kernströmung 24.

Im Bereich zwischen dem Grundkörper 12 und der Hülse 28, insbesondere im Stauvolumen 42, stellt sich ein Druck ein, der zwischen dem Druck im Innenvolumen 14 und dem Umgebungsdruck liegt. Wird angenommen, dass in diesem Bereich näherungsweise ein homogener Druck vorliegt, kann die resultierende Kraft, die auf die Hülse 28 wirkt, durch die Wahl der Flächenverhältnisse einer Innenfläche 29 der Hülse 28 eingestellt werden. Ziel ist hierbei, eine resultierende Kraft zu erzeugen, die in Ausbreitungsrichtung des Laserstrahls, d.h. in Richtung des Werkstücks 26, wirkt, sodass die Hülse 28 in Richtung des Werkstücks 26 gedrückt wird und auf dem Werkstück 26 aufsetzt. Die Düse 12 kann also als Aufsetzdüse ausgebildet sein.

Demnach ist es erforderlich, dass die unter Gasdruck in Ausbreitungsrichtung des Laserstrahls wirkenden Flächenanteile der Innenfläche 29 der Hülse 28 größer sind als die entgegen der Ausbreitungsrichtung des Laserstrahls wirkenden Flächenanteile der Innenfläche 29. Dies ist beispielsweise der Fall, wenn der Innendurchmesser des Bundbereichs 30 größer ist als der Innendurchmesser des Ringspaltbereichs 34. Beispielsweise können die sich senkrecht zur axialen Richtung erstreckenden Flächenanteile der Innenfläche 29 der Hülse 28, die sich in axialer Richtung auf einer dem Düsenmund 22 zugewandten Seite des Verbindungskanals 44 befinden, auch als "erster Flächenteil" 29a bezeichnet, größer sein als die sich senkrecht zur axialen Richtung erstreckenden Flächenanteile der Innenfläche 29 der Hülse 28, die sich in axialer Richtung auf einer dem Düsenmund 22 abgewandten Seite des Verbindungskanals 44 befinden, auch als "zweiter Flächenteil" 29b bezeichnet. Die Offenbarung ist darauf aber nicht beschränkt.

Wie in Fig. 2A bis 2C gezeigt, ist die Hülse 28 in axialer Richtung, d.h. entlang der Längsachse 11 des Grundkörpers 12, relativ zum Grundkörper 12 verschiebbar. Mit anderen Worten ist die Hülse 28 relativ zum Grundköper 12 in axialer Richtung beweglich. Vorzugsweise mündet der zumindest eine Verbindungskanal 44 für jede beliebige Position der Hülse 28 relativ zum Grundköper 12 in das Stauvolumen 42. Wie in Fig. 2A bis 2C ersichtlich, ist das Stauvolumen 42 bei verschiedenen Positionen der Hülse 28 verschieden groß, die Offenbarung ist aber nicht darauf beschränkt.

Zusätzlich zu einer Bewegung in axialer Richtung kann die Hülse 28 bezüglich des Grundkörpers 12 verkippen. Mit anderen Worten ist die Hülse 28 um den Bundbereich 30 bezüglich des Grundkörpers 12 verkippbar.

Der Bundbereich 30 der Hülse 28 erstreckt sich radial nach innen hin zum Führungsbereich 32 des Grundkörpers 12 und umgibt einen Teil des Führungsbereichs 32. Der Bundbereich 30 und/oder der Führungsbereich 32 können zylinderförmig ausgebildet sein, wobei entsprechend der Erfindung der Führungsbereich (32) im Wesentlichen zylinderringförmig ausgebildet ist. Insbesondere kann der Bundbereich 30 einen zylinderringförmigen Bund, Flansch oder eine zylinderringförmige Auskragung aufweisen, die Offenbarung ist aber nicht darauf beschränkt.

Wie gezeigt ist der Innenradius des Bundbereichs 30 größer als ein Außenradius des Führungsbereichs 32. Der Bundbereich 30 ist also vom Führungsbereich 32 beabstandet. Zwischen dem Bundbereich 30 und dem Führungsbereich 32 ist also ein Spalt 48 ausgebildet. Der Spalt 48 kann zylinderringförmig ausgebildet sein, die Offenbarung ist aber nicht darauf beschränkt. Während des Betriebs der Düse 10 bilden der Bundbereich 30 und der Führungsbereich 32 eine Spaltdichtung. Dies ermöglicht eine reibungsfreie bzw. eine reibungsarme Bewegung, z.B. eine Linear- und Kippbewegung, der Hülse 28 relativ zum Grundkörper 12. Alternativ kann zwischen dem Bundbereich 30 und dem Führungsbereich 32 eine Spielpassung ausgebildet sein.

Der Führungsbereich 32 umfasst ferner einen radial nach außen ragenden Vorsprung 52, der an einem dem Düsenmund 22 zugewandten Ende des Führungsbereichs 32 ausgebildet ist und der die axiale Bewegung der Hülse 28 entlang der Längsachse 11 des Grundkörpers 12 begrenzt. Dazu ist der Außenradius des Vorsprungs 52 größer als der Innenradius des Bundbereichs 30 der Hülse 28. Die Hülse 28 ist also so auf den Grundkörper 12 aufgesetzt, dass der Bundbereich 30 der Hülse 28 zusammen mit dem Vorsprung 52 die Bewegung der Hülse 28 in axialer Richtung begrenzen. Der Vorsprung 52 verhindert also ein Abgleiten der Hülse 28 in Richtung des Werkstücks 26. In der gezeigten Ausführungsform ist der Vorsprung 52 als Bund, insbesondere als zylinderringförmiger Bund, Flansch oder Auskragung, ausgebildet, die Offenbarung ist aber nicht darauf beschränkt.

Der Grundkörper 12 weist in einer Ausführungsform ein Sicherungselement 50 auf. Das Sicherungselement 50 kann lösbar mit einer das Innenvolumen 14 des Grundkörpers 12 umgebenden Wandung 54 des Grundkörpers 12 verbindbar sein. Die lösbare Verbindung (nicht gezeigt) kann als Gewinde, Steckbolzen, mittels einer Schraube oder ähnlichem erfolgen. Das Sicherungselement 50 kann den Vorsprung 52 aufweisen. Optional kann das Sicherungselement 50 zumindest einen Teil des Führungsbereichs 32 aufweisen.

In einer Ausführungsform umfasst die Hülse 28 ein erstes Teil 56 und ein zweites Teil 58. Das erste Teil 56 umfasst den Bundbereich 30 und das zweite Teil 58 umfasst den Ringspaltbereich 34. Die beiden Teile 56 und 58 können lösbar miteinander verbindbar sein, die Offenbarung ist aber nicht darauf beschränkt. Die lösbare Verbindung (nicht gezeigt) kann durch Gewinde, Steckbolzen, Schrauben oder ähnlichem erfolgen. Mit anderen Worten ist die Hülse 28 im mittleren Bereich trennbar ausgeführt.

Die Montage der Düse 10 erfolgt vorzugsweise derart, dass zunächst das Sicherungselement 50 und der erste Teil 56 der Hülse 28 ineinandergelegt werden. Diese Kombination wird dann mit dem Grundkörper 12 verbunden, insbesondere verschraubt. Abschließend wird der zweite Teil 58 der Hülse 28 mit dem ersten Teil 56 verbunden, insbesondere verschraubt. Während des Betriebs der Düse 10, insbesondere während eines Laserbearbeitungsprozesses mittels einer Laserbearbeitungsvorrichtung, die die beschriebene Düse 10 umfasst, wird vor allem der zweite Teil 58 der Hülse 28 verschlissen, da dieser Teil über das Werkstück 26 geführt wird und sich am nächsten an der Prozesszone befindet und demnach am stärksten den Prozessemissionen ausgesetzt ist. Durch die Erfindung kann dieser zweite Teil 58 schnell ausgetauscht werden, ohne die gesamte Düse 10 demontieren zu müssen. Darüber hinaus ist es jedoch auch möglich, alle anderen Teile der Düse 10 auszuwechseln. Darüber hinaus kann auch der Grundkörper 12 zumindest zweiteilig ausgeführt sein, wobei die Teile ebenfalls lösbar miteinander verbunden sind.

Die Düse 10 muss nicht zwingend ein Sicherungselement 50 aufweisen. Ebenso kann die Hülse 28 auch einteilig ausgebildet sein. In einer Ausführungsform ohne Sicherungselement kann das Material, aus dem zumindest ein Teil der Hülse 28 bzw. zumindest das erste Teil 56 der Hülse 28 besteht, ein elastisches Material sein. Dann kann die Hülse 28 bei Montage an den Grundkörper 12 über den Vorsprung 52 gestülpt werden. Entsprechend kann auch nur der Bundbereich 30 der Hülse 28 aus elastischem Material bestehen. Alternativ oder zusätzlich kann auch der Vorsprung 52 aus elastischem Material bestehen.

Die Hülse 28 kann aus einem isolierenden Material ausgebildet sein. Hier kann beispielsweise Keramik, Peek oder ein anderer temperaturbeständiger Kunststoff gewählt werden. Bei Verwendung einer kapazitiven Abstandssensorik zur Bestimmung des Abstands der Laserbearbeitungsvorrichtung, insbesondere des Grundkörpers 12, zum Werkstück 26 kann so ein Arbeitsabstand zwischen dem Werkstück 26 und der Laserbearbeitungsvorrichtung bzw. dem Grundkörper 12, der beispielsweise aus Kupfer hergestellt sein kann, ermittelt bzw. eingestellt werden, ohne dass die Messung durch das Vorhandensein der Hülse 28 beeinflusst wird. Der maximale Arbeitsabstand, bei dem noch eine Abdichtung des Schnittspalts zur Umgebung erfolgt, ist dann gegeben durch den maximalen Überstand der Hülse 28 über den Grundkörper 12, bis die Hülse 28 am Vorsprung 52 des Sicherungselements 50 anliegt. In Figuren 2A, 2B und 2C ist die Düse 10 mit einem Werkstück 26 und Arbeitsabständen zwischen Grundkörper und Werkstück von jeweils 0,5 mm, 1,0 mm und 1,5 mm dargestellt.

Das Sicherungselement 50 kann, wie der Grundkörper 12, ebenfalls aus Kupfer gefertigt werden. Um einer Kaltverschweißung des Sicherungselements 50 mit dem Grundkörper 12 vorzubeugen, kann es jedoch vorteilhaft sein, einen anderen metallischen Werkstoff, z.B. Edelstahl, zu verwenden. Hierdurch wird auch sichergestellt, dass die Einzelteile mehrmals gewechselt werden können.

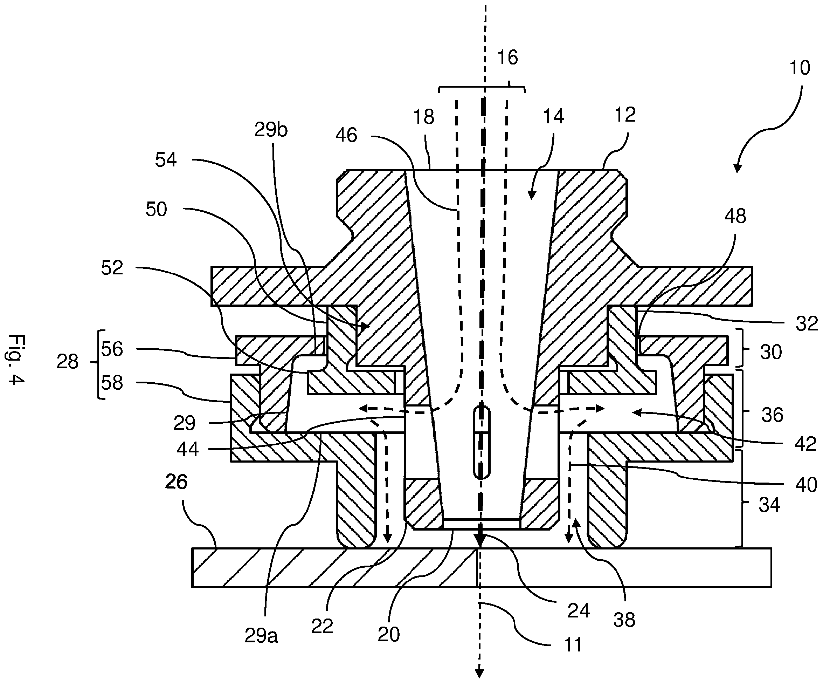

Figur 4 zeigt eine schematische Querschnittsansicht einer Düse für eine Laserbearbeitungsvorrichtung zur Bearbeitung eines Werkstücks mittels eines Laserstrahls gemäß einer zweiten Ausführungsform der Offenbarung. Im Folgenden werden lediglich die Unterschiede zur Düse 10 gemäß der ersten Ausführungsform der Offenbarung beschrieben.

Wie in Figur 4 gezeigt ist der zumindest eine Verbindungskanal 44 als Langloch ausgebildet. Der zumindest eine Verbindungskanal 44 mündet für jede Position der Hülse 28 relativ zum Grundköper 12 bevorzugt zumindest teilweise in das Stauvolumen 42. Durch Verwendung von Langlöchern erhöht sich bei gleichbleibendem Vordruck der Durchfluss durch die Düse 10. Außerdem erhöht sich der Volumenstromanteil in der Ringströmung 40.

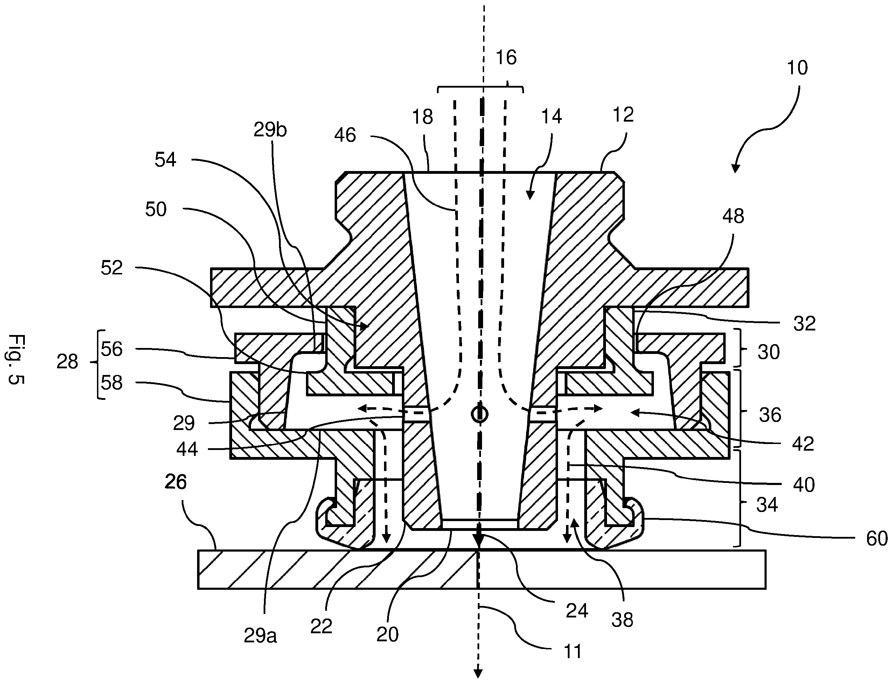

Figur 5 zeigt eine schematische Querschnittsansicht einer Düse für eine Laserbearbeitungsvorrichtung zur Bearbeitung eines Werkstücks mittels eines Laserstrahls gemäß einer dritten Ausführungsform der Offenbarung. Im Folgenden werden lediglich die Unterschiede zur Düse 10 gemäß der ersten Ausführungsform der Offenbarung beschrieben.

Die in Figur 5 gezeigte Düse weist zusätzlich einen Verschleißring 60 auf. Der Verschleißring 60 ist an einem in axialer Richtung der Hülse 28 dem Werkstück zugewandten Ende der Hülse 28 ausgebildet. Der Verschleißring 60 kann durch Bördeln, Verschrauben, Kleben oder Klemmen an der Hülse 28 angebracht werden. Der Verschleißring 60 kann während der Bearbeitung des Werkstücks 26 auf dem Werkstück 26 aufgesetzt sein. Mit anderen Worten ist der Verschleißring 60 das Element der Düse 10, welches bei der Bearbeitung mit dem Werkstück in Kontakt kommt. Der Verschleißring 60 ist demnach das Element der Düse 10, welches am stärksten dem Verschleiß ausgesetzt ist. Wenn der Verschleißring 60 abnehmbar von der Hülse 28 ausgebildet ist, kann dieser bei Bedarf leicht und einfach ausgetauscht werden. Der Verschleißring 60 kann aus Messing hergestellt sein. Dadurch ist es möglich, den Verschleißring 60 besonders verschleißfest, temperaturbeständig und mit einem hohen Reflexionsgrad auszubilden.

Die Düse gemäß Ausführungsformen der vorliegenden Offenbarung ermöglicht es, dass mittels eines Verbindungskanals ein Teil des Prozessgases vom Innenvolumen des Grundkörpers in einen Bereich zwischen dem Grundkörper und der Hülse geleitet wird, um neben der Kernströmung eine mit dem Laserstrahl koaxiale Ringströmung des Prozessgases zu erzeugen.

Die Düse gemäß Ausführungsformen der vorliegenden Offenbarung weist ferner einen Führungsbereich am Grundkörper zum Führen der beweglichen Hülse auf, der in axialer Richtung des Grundkörpers oberhalb des Verbindungskanals bzw. auf einer dem Düsenmund abgewandten Seite des Verbindungskanals am Grundkörper angeordnet ist, sodass sich der Verbindungskanal zwischen dem Führungsbereich und dem Düsenmund befindet. Dadurch erhöht sich der Abstand zwischen dem Führungsbereich und dem Düsenmund bzw. zwischen dem Führungsbereich und der Prozesszone, in der die Prozessemissionen entstehen. Somit kann ein Zusetzen der Düse bzw. Bereichen zwischen dem Grundkörper und der Hülse durch die Prozessemissionen vermindert bzw. verhindert werden, sodass die Beweglichkeit der Hülse relativ zum Grundkörper erhalten bleibt.

Die Düse gemäß Ausführungsformen der vorliegenden Offenbarung weist eine Hülse auf, die mehrteilig ausgebildet ist. Dadurch können verschleißgefährdete Teile leicht zugänglich sein und bei Bedarf leicht und einfach ausgetauscht werden. In diesem Fall können alle anderen Teile der Düse bzw. der Hülse weiterverwendet werden. Somit erhöht sich die Wartungsfreundlichkeit der Düse weiter. Die lösbare Verbindung der beiden Teile kann durch Gewinde, Steckbolzen, eine Schraube oder ähnlichem erfolgen.

Die Düse gemäß Ausführungsformen der vorliegenden Offenbarung weist eine Hülse auf, die bezüglich des Grundkörpers verkippbar ist. Dadurch kann die Hülse Unebenheiten auf dem Werkstück ausweichen und so eine Abdichtung des Schnittspalts zur Umgebung selbst bei unebener Werkstückoberfläche aufrechterhalten.

Die Düse gemäß Ausführungsformen der vorliegenden Offenbarung weist eine Spaltdichtung zwischen dem Bundbereich der Hülse und dem Führungsbereich des Grundkörpers auf. Dadurch kann Reibung zwischen der Hülse und dem Grundkörper bei einer Bewegung der Hülse verringert bzw. vermieden werden. Zudem ermöglicht die Spaltdichtung eine bessere Verkippbarkeit der Hülse bezüglich des Grundkörpers.

Die Düse gemäß Ausführungsformen der vorliegenden Offenbarung weist eine Hülse auf, die den Grundkörper zumindest teilweise umfänglich umgibt. Insbesondere kann die Hülse kann die Düse radial nach außen bzw. zur Umgebung hin abgrenzen oder begrenzen. Mit anderen Worten kann die Hülse außen am Grundkörper angeordnet sein. Dadurch wird die Wartungsfreundlichkeit der Düse erhöht.

### Bezugszeichenliste

- 10: Düse
- 11: Längsachse
- 12: Grundkörper
- 14: Innenvolumen
- 16: Prozessgas
- 18: Eintrittsöffnung
- 20: Austrittsöffnung
- 22: Düsenmund
- 24: Kernströmung
- 26: Werkstück
- 28: Hülse
- 29: Innenfläche der Hülse
- 29a: erster Flächenteil
- 29b: zweiter Flächenteil
- 30: Bundbereich
- 32: Führungsbereich
- 34: Ringspaltbereich
- 36: Stauvolumenbereich
- 38: Ringspalt
- 40: Ringströmung
- 42: Stauvolumen
- 44: Verbindungskanal
- 46: Teil des Prozessgases
- 48: Spalt
- 50: Sicherungselement
- 52: Vorsprung
- 54: Wandung
- 56: erstes Teil der Hülse
- 58: zweites Teil der Hülse
- 60: Verschleißring

## Patentansprüche

1. Düse (10) für eine Laserbearbeitungsvorrichtung zur Bearbeitung eines Werkstücks (26) mittels eines Laserstrahls, die Düse (10) umfassend:
- einen Grundkörper (12) mit einer Längsachse (11), wobei der Grundkörper (12) ein Innenvolumen (14) zum Durchleiten des Laserstrahls und von Prozessgas (16) und einen Düsenmund (22) mit einer Austrittsöffnung (20) zum Austritt des Laserstrahls und einer Kernströmung (24) des Prozessgases (16) aufweist,
- eine bewegliche Hülse (28) mit einem Bundbereich (30), der entlang eines Führungsbereichs (32) des Grundkörpers (12) verschiebbar ist, und einem Ringspaltbereich (34), der vom Grundkörper (12) beabstandet ist und zusammen mit dem Grundkörper (12) einen Ringspalt (38) zum Austritt einer Ringströmung (40) des Prozessgases (16) bildet,
**dadurch gekennzeichnet, dass**
der Bundbereich (30) sich radial nach innen zum Führungsbereich (32) des Grundkörpers (12) hin erstreckt und einen Teil des Führungsbereichs (32) umgibt, wobei radial nach innen eine radiale Richtung bezeichnet, die zur Längsachse (11) des Grundkörpers (12) hinzeigt,
dass der Führungsbereich (32) im Wesentlichen zylinderringförmig ausgebildet ist,
und dass der Grundkörper (12) zumindest einen Verbindungskanal (44) aufweist, der das Innenvolumen (14) des Grundkörpers (12) mit einem Bereich zwischen dem Grundkörper (12) und der Hülse (28) verbindet, um einen Teil (46) des Prozessgases (16) in den Ringspalt (38) zu leiten.

2. Düse (10) gemäß Anspruch 1, wobei die Hülse (28) entlang der Längsachse (11) des Grundkörpers (12) verschiebbar ist.

3. Düse (10) gemäß Anspruch 1 oder 2, wobei die Hülse (28) ferner bezüglich des Grundkörpers (12) verkippbar ist.

4. Düse (10) gemäß einem der vorstehenden Ansprüche, wobei der zumindest eine Verbindungskanal (44) zwischen dem Führungsbereich (32) und dem Düsenmund (22) angeordnet ist.

5. Düse (10) gemäß einem der vorstehenden Ansprüche, wobei die Hülse (28) ferner einen zwischen dem Bundbereich (30) und dem Ringspaltbereich (34) angeordneten Stauvolumenbereich (36) umfasst, der zusammen mit dem Grundkörper (12) ein mit dem Ringspalt (38) verbundenes Stauvolumen (42) definiert.

6. Düse (10) gemäß Anspruch 4, wobei ein Innenradius der Hülse (28) im Stauvolumenbereich (36) größer ist als ein Innenradius der Hülse (28) im Ringspaltbereich (34) und/oder ein Innenradius der Hülse (28) im Bundbereich (30).

7. Düse (10) gemäß einem der vorstehenden Ansprüche, wobei die Hülse (28) eine Innenfläche (29) aufweist, die vom Grundkörper (12) beabstandet ist und so ausgebildet ist, dass eine aus dem Prozessgasdruck im Bereich zwischen der Hülse (28) und dem Grundkörper (12) resultierende Kraft auf die Hülse (28) in Richtung des Düsenmunds (22) wirkt.

8. Düse (10) gemäß einem der vorstehenden Ansprüche, wobei ein Innenradius des Bundbereichs (30) größer ist als ein Außenradius des Führungsbereichs (32) des Grundköpers (12), und/oder wobei der Bundbereich (30) vom Führungsbereich (32) beabstandet ist und/oder wobei der Bundbereich (30) und der Führungsbereich (32) eine Spaltdichtung bilden.

9. Düse (10) gemäß einem der vorstehenden Ansprüche, wobei der Grundkörper (12) zumindest einen radial nach außen ragenden Vorsprung (52) aufweist, der an einem dem Düsenmund (22) zugewandten Ende des Führungsbereichs (32) ausgebildet ist und der die Bewegung der Hülse (28) in axialer Richtung (11) des Grundkörpers (12) begrenzt.

10. Düse (10) gemäß einem der vorstehenden Ansprüche, wobei der Grundkörper (12) ein Sicherungselement (50) aufweist, welches den Führungsbereich (32) und/oder den Vorsprung (52) umfasst, wobei das Sicherungselement (50) lösbar mit einer das Innenvolumen (14) umgebenden Wandung (54) des Grundkörpers (12) verbindbar ist.

11. Düse (10) gemäß einem der vorstehenden Ansprüche, wobei die Hülse (28) ein erstes Teil (56) und ein zweites Teil (58) umfasst, die lösbar miteinander verbindbar sind, wobei das erste Teil (56) den Bundbereich (30) und/oder das zweite Teil (58) den Ringspaltbereich (34) umfasst.

12. Düse (10) gemäß einem der vorstehenden Ansprüche, wobei der Grundkörper (12) im Führungsbereich (32) eine zylindrische Außenform aufweist.

13. Düse (10) gemäß einem der vorstehenden Ansprüche, wobei zumindest der Bundbereich (30) und/oder das erste Teil (56) der Hülse (28) aus einem elastischen Material besteht, und/oder wobei der Grundkörper (12) Kupfer umfasst, und/oder wobei das Sicherungselement (50) Edelstahl oder Kupfer umfasst.

14. Düse (10) gemäß einem der vorstehenden Ansprüche, wobei die Hülse (28) und/oder der Bundbereich (30) der Hülse (28) nach außen hin freiliegend an der Düse angeordnet sind, und/oder wobei ein Strömungsvolumen des Prozessgases in der Düse ausschließlich durch den Grundkörper (12) und die Hülse (28) begrenzt ist.

15. Laserbearbeitungsvorrichtung zur Bearbeitung eines Werkstücks (26) mittels eines Laserstrahls mit:
- einem Bearbeitungskopf,
und **gekennzeichnet durch**:
- einer Düse (10) gemäß einem der vorstehenden Ansprüche, die am Bearbeitungskopf angeordnet ist.

## Claims

1. A nozzle (10) for a laser machining device for machining a workpiece (26) by means of a laser beam, the nozzle (10) comprising:
- a base body (12) having a longitudinal axis (11), wherein the base body (12) has an inner volume (14) for passing the laser beam and process gas (16) and a nozzle mouth (22) having an exit orifice (20) for the exit of the laser beam and a core flow (24) of the process gas (16),
- a movable sleeve (28) having a collar region (30) which is displaceable along a guide region (32) of the base body (12), and an annular gap region (34) which is spaced apart from the base body (12) and, together with the base body (12), forms an annular gap (38) for the exit of an annular flow (40) of the process gas (16),
**characterised in that**
the collar region (30) extends radially inwards towards the guide region (32) of the base body (12) and surrounds a part of the guide region (32), wherein radially inwards designates a radial direction pointing towards the longitudinal axis (11) of the base body (12),
**in that** the guide region (32) is formed substantially in a cylindrical-ring-shape,
and **in that** the base body (12) has at least one connecting channel (44) which connects the inner volume (14) of the base body (12) to a region between the base body (12) and the sleeve (28) in order to direct a part (46) of the process gas (16) into the annular gap (38).

2. The nozzle (10) according to claim 1, wherein the sleeve (28) is displaceable along the longitudinal axis (11) of the base body (12).

3. The nozzle (10) according to claim 1 or 2, wherein the sleeve (28) is further tiltable with respect to the base body (12).

4. The nozzle (10) according to any one of the preceding claims, wherein the at least one connecting channel (44) is arranged between the guide region (32) and the nozzle mouth (22).

5. The nozzle (10) according to any one of the preceding claims, wherein the sleeve (28) further comprises an impoundment volume region (36) arranged between the collar region (30) and the annular gap region (34), the impoundment volume region (36) defining together with the base body (12) an impoundment volume (42) connected to the annular gap (38).

6. The nozzle (10) according to claim 4, wherein an inner radius of the sleeve (28) in the impoundment volume region (36) is larger than an inner radius of the sleeve (28) in the annular gap region (34) and/or an inner radius of the sleeve (28) in the collar region (30).

7. The nozzle (10) according to any one of the preceding claims, wherein the sleeve (28) has an inner surface (29) which is spaced apart from the base body (12) and is formed such that a force resulting from the process gas pressure in the region between the sleeve (28) and the base body (12) acts on the sleeve (28) in the direction of the nozzle mouth (22).

8. The nozzle (10) according to any one of the preceding claims, wherein an inner radius of the collar region (30) is greater than an outer radius of the guide region (32) of the base body (12), and/or wherein the collar region (30) is spaced apart from the guide region (32), and/or wherein the collar region (30) and the guide region (32) form a gap seal.

9. The nozzle (10) according to any one of the preceding claims, wherein the base body (12) has at least one radially outwardly projecting projection (52) which is formed at an end of the guide region (32) facing the nozzle mouth (22) and which limits the movement of the sleeve (28) in axial direction (11) of the base body (12).

10. The nozzle (10) according to any one of the preceding claims, wherein the base body (12) has a securing element (50) which comprises the guide region (32) and/or the projection (52), wherein the securing element (50) is releasably connectable to a wall (54) of the base body (12) surrounding the inner volume (14).

11. The nozzle (10) according to any one of the preceding claims, wherein the sleeve (28) comprises a first part (56) and a second part (58) which are releasably connectable to each other, wherein the first part (56) comprises the collar region (30) and/or the second part (58) comprises the annular gap region (34).

12. The nozzle (10) according to any one of the preceding claims, wherein the base body (12) has a cylindrical outer shape in the guide region (32).

13. The nozzle (10) according to any one of the preceding claims, wherein at least the collar region (30) and/or the first part (56) of the sleeve (28) consists of an elastic material, and/or wherein the base body (12) comprises copper, and/or wherein the securing element (50) comprises stainless steel or copper.

14. The nozzle (10) according to any one of the preceding claims, wherein the sleeve (28) and/or the collar region (30) of the sleeve (28) are arranged exposed to the outside of the nozzle, and/or wherein a flow volume of the process gas in the nozzle is limited exclusively by the base body (12) and the sleeve (28).

15. A laser machining device for machining a workpiece (26) by means of a laser beam, having:
- a machining head,
and **characterised by**:
- a nozzle (10) according to any one of the preceding claims, which is arranged on the machining head.

## Revendications

1. Buse (10) pour un dispositif d'usinage au laser pour usiner une pièce (26) au moyen d'un faisceau laser, la buse (10) comprenant :
- un corps de base (12) ayant un axe longitudinal (11), dans laquelle le corps de base (12) a un volume intérieur (14) pour le passage du faisceau laser et d'un gaz de procédé (16), et une embouchure de buse (22) avec un orifice de sortie (20) pour la sortie du faisceau laser et un écoulement central (24) du gaz de procédé (16),
- une douille mobile (28) avec une zone de collerette (30) mobile le long d'une zone de guidage (32) du corps de base (12), et une zone d'interstice annulaire (34) espacée du corps de base (40) et formant avec le corps de base (12) un interstice annulaire (38) pour la sortie d'un écoulement annulaire (40) du gaz de procédé (16),
**caractérisée en ce que**
la zone de collerette (30) s'étend radialement vers l'intérieur par rapport à la zone de guidage (32) du corps de base (12) et entoure une partie de la zone de guidage (32), dans laquelle l'expression "radialement vers l'intérieur" désigne une direction radiale qui pointe vers l'axe longitudinal (11) du corps de base (12),
la zone de guidage (32) est conçue sensiblement en forme de bague cylindrique,
et le corps de base (12) comporte au moins un canal de liaison (44) qui relie le volume intérieur (14) du corps de base (12) et une zone située entre le corps de base (12) et la douille (28) afin de guider une partie (46) du gaz de procédé (16) dans l'interstice annulaire (38).

2. Buse (10) selon la revendication 1, dans laquelle la douille (28) est mobile le long de l'axe longitudinal (11) du corps de base (12).

3. Buse (10) selon la revendication 1 ou 2, dans laquelle la douille (28) peut en outre basculer par rapport au corps de base (12).

4. Buse (10) selon l'une des revendications précédentes, dans laquelle le au moins un canal de liaison (44) est agencé entre la zone de guidage (32) et l'embouchure de buse (22).

5. Buse (10) selon l'une des revendications précédentes, dans laquelle la douille (28) comprend en outre une zone de volume d'accumulation (36) agencée entre la zone de collerette (30) et la zone d'interstice annulaire (34), qui définit avec le corps de base (12) un volume d'accumulation (42) relié à l'interstice annulaire (38).

6. Buse (10) selon la revendication 4, dans laquelle un rayon intérieur de la douille (28) dans la zone de volume d'accumulation (36) est supérieur à un rayon intérieur de la douille (28) dans la zone d'interstice annulaire (34) et/ou à un rayon intérieur de la douille (28) dans la zone de collerette (30).

7. Buse (10) selon l'une des revendications précédentes, dans laquelle la douille (28) comporte une surface intérieure (29) espacée du corps de base (12) et conçue de telle sorte qu'une force résultant de la pression du gaz de procédé dans la zone située entre la douille (28) et le corps de base (12) agit sur la douille (28) en direction de l'embouchure de buse (22).

8. Buse (10) selon l'une des revendications précédentes, dans laquelle un rayon intérieur de la zone de collerette (30) est supérieur à un rayon extérieur de la zone de guidage (32) du corps de base (12), et/ou dans laquelle la zone de collerette (30) est espacée de la zone de guidage (32) et/ou dans laquelle la zone de collerette (30) et la zone de guidage (32) forment un joint d'interstice.

9. Buse (10) selon l'une des revendications précédentes, dans laquelle le corps de base (12) comporte au moins une saillie (52) faisant radialement saillie vers l'extérieur, laquelle saillie est formée sur une extrémité de la zone de guidage (32) dirigée vers l'embouchure de buse (22) et limite le mouvement de la douille (28) dans la direction axiale (11) du corps de base (12).

10. Buse (10) selon l'une des revendications précédentes, dans laquelle le corps de base (12) comporte un élément de blocage (50) comprenant la zone de guidage (32) et/ou la saillie (52), dans laquelle l'élément de blocage (50) peut être relié de manière amovible à une paroi (54) du corps de base (12) entourant le volume intérieur (14).

11. Buse (10) selon l'une des revendications précédentes, dans laquelle la douille (28) comprend une première partie (56) et une seconde partie (58) qui peuvent être reliées l'une à l'autre de manière amovible, dans laquelle la première partie (56) comprend la zone de collerette (30) et/ou la seconde partie (58) comprend la zone d'interstice annulaire (34).

12. Buse (10) selon l'une des revendications précédentes, dans laquelle le corps de base (12) a une forme extérieure cylindrique dans la zone de guidage (32).

13. Buse (10) selon l'une des revendications précédentes, dans laquelle au moins la zone de collerette (30) et/ou la première partie (56) de la douille (28) est constituée d'un matériau élastique, et/ou dans laquelle le corps de base (12) comprend du cuivre, et/ou dans laquelle l'élément de blocage (50) comprend de l'acier inoxydable ou du cuivre.

14. Buse (10) selon l'une des revendications précédentes, dans laquelle la douille (28) et/ou la zone de collerette (30) de la douille (28) sont agencées sur la buse de manière exposée vers l'extérieur, et/ou dans laquelle un volume d'écoulement du gaz de procédé dans la buse est délimité exclusivement par le corps de base (12) et la douille (28).

15. Dispositif d'usinage au laser pour usiner une pièce (26) au moyen d'un faisceau laser, comportant :
- une tête d'usinage,
et **caractérisé par** :
- une buse (10) selon l'une des revendications précédentes qui est agencée sur la tête d'usinage.
